Europäisches Patentamt

European Patent Office

Office européen des brevets

(11) Publication number: **0 329 624**
**A2**

(12) # EUROPEAN PATENT APPLICATION

(21) Application number: **89830053.8**

(51) Int. Cl.⁴: **B 23 C 5/10**

(22) Date of filing: **14.02.89**

(30) Priority: **19.02.88 IT 6712988**

(43) Date of publication of application:
**23.08.89 Bulletin 89/34**

(84) Designated Contracting States:
**AT BE CH DE ES FR GB GR IT LI LU NL SE**

(71) Applicant: **OFFICINE DI CERES - UTENSILERIE RIUNITE S.p.A.**
**Via Torino 202**
**I-10074 Lanzo Torinese Torino (IT)**

(72) Inventor: **Rodes, Giovanni**
**Via Vignassa, 3**
**I-10070 Ceres (Torino) (IT)**

(74) Representative: **Rambelli, Paolo et al**
**Jacobacci-Casetta & Perani S.p.A. Via Alfieri 17**
**I-10121 Torino (IT)**

(54) **A rotary cutting tool.**

(57) A rotary cutting tool, particularly a cylindrical end mill, has a plurality of helical teeth (14, 16, 18, 20) each of which is constituted by a plurality of axially adjacent cutting sectors (T) each having a helical cutting-edge section (24a) and a connecting section (24b) which extends substantially axially, the helical cutting-edge section having a helix angle (AE) larger than the theoretical helix angle (AT) characterising the helical shape of each tooth.

FIG. 2

EP 0 329 624 A2

**Description**

## A rotary cutting tool

The present invention relates to a rotary cutting tool, particularly a cylindrical end mill of the type comprising an elongate body with an attachment portion and a cutting portion, in which the cutting portion has a plurality of helical grooves defining between them a corresponding plurality of helical teeth each having a peripheral surface, a cutting edge, a face, a groove for discharging the chips, and a back.

The object of the invention is to produce a rotary cutting tool which enables an improved milling rate to be achieved whilst maintaining good finishing characteristics, particularly by enabling rough-milling and finishing in a single pass.

This object is achieved by virtue of a tool of the type specified above, characterised in that each tooth is constituted by a plurality of adjacent cutting sectors each of which has a helical cutting-edge section and a connecting section which extends in an axial plane, the helical cutting-edge section having a helix angle larger than the ideal theoretical helix angle characterising the helical shape of each tooth.

Further characteristics and advantages of the cutting tool of the invention will become clear from the detailed description which follows with reference to the appended drawings, provided by way of non-limiting example, in which:

Figure 1 is a perspective view of a cylindrical end mill according to the invention,

Figure 2 is a perspective view of a second embodiment of a mill according to the invention,

Figure 3 is a front elevation of the mill of Figure 2,

Figure 4 is a cross-section taken on the line III-III of Figure 3;

Figure 5 shows the lateral surface of the mill of Figure 2 developed in a plane;

Figure 6 is a perspective view of a detail of Figure 2,

Figure 7 is a schematic view of the linear development of a tooth of the mill of Figure 1;

Figure 8 is a view of the mill of Figure 2, partially sectioned in an axial plane.

With reference to the drawings, a cylindrical end mill, generally indicated 1, is constituted by an elongate body having an attachment shank 2 and a portion 4 with cutting surfaces formed from a cylindrical or possibly conical body.

In the embodiments illustrated in the drawings, the cylindrical end mill has four helical grooves, indicated 6, 8, 10 and 12, which define four helical teeth 14, 16, 18 and 20.

Each tooth has a peripheral surface 22 and a face 26 the intersection of which defines a cutting edge 24, a groove 28 for discharging the chips, and a back 30.

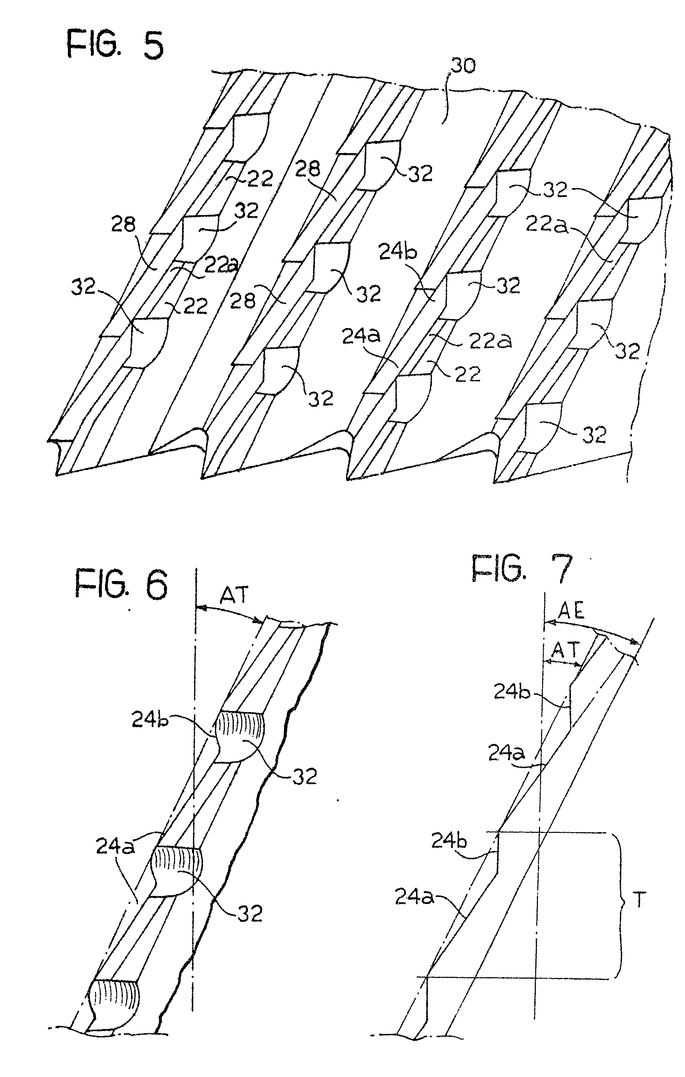

According to the invention, each tooth is constituted by a plurality of successive cutting sectors T (Figure 7) each of which has a helical cutting-edge section 24a and a connecting section 24b which extends in an axial plane. In Figure 7, the helix angle of the helical cutting-edge section 24a is indicated AE and may be defined as the effective helix angle of the cutting edge. The angle AE is larger than the theoretical helix angle AT which characterises the helical shape of each tooth. The angle AT may be defined as the angle of the helix which passes through the points of intersection between each helical cutting-edge section 24a and the section 24b. The size of the angle AE depends on the material which the mill is intended to work and is generally between 10 and 45°.

Preferably, the cutting sectors are geometrically and dimensionally identical to each other, but the cutting sectors of each tooth are offset axially from the cutting sectors of the adjacent tooth. This arrangement ensures the uniform distribution of the cutting forces.

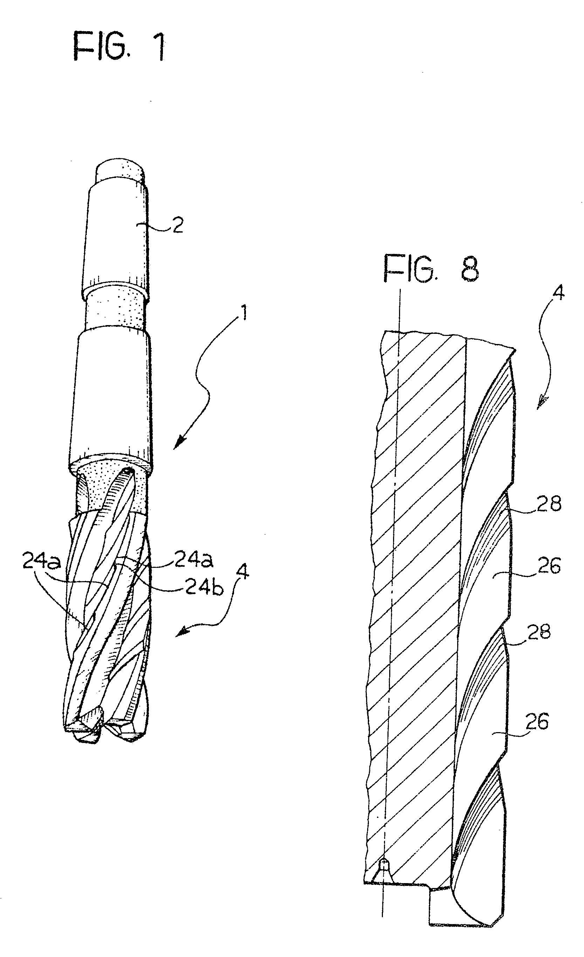

According to the embodiment of Figure 1, the section 24b of the cutting edge is substantially rectilinear and extends axially.

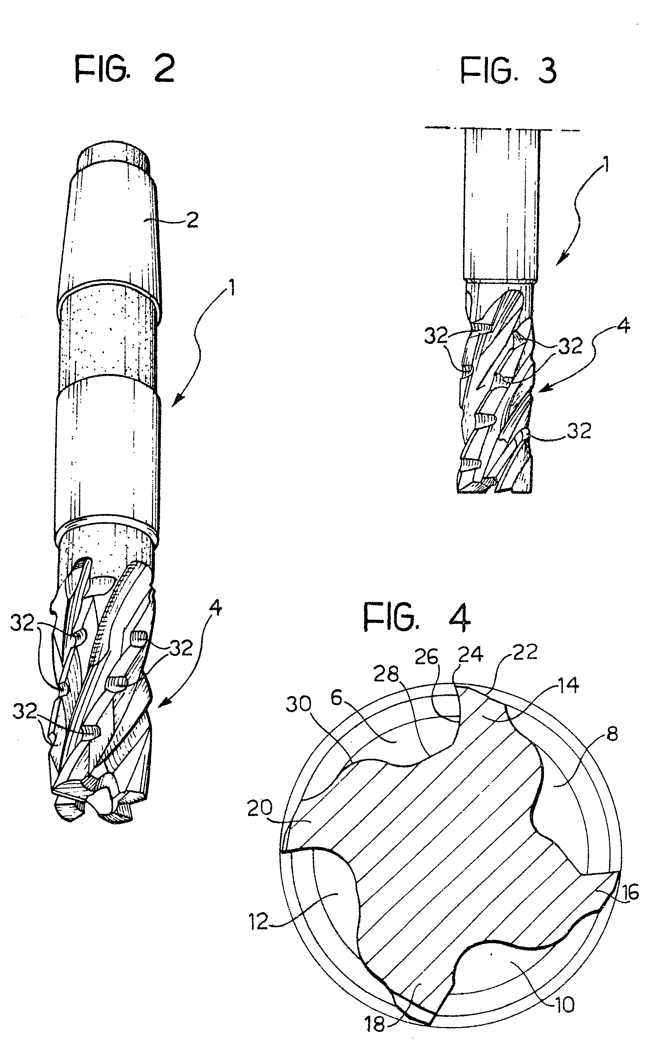

In the embodiment of Figure 2, the peripheral surface 22 has a notch 32 in correspondence with each connecting section 24b. With reference in greater detail to the planar development of the toothed surface of the mill of Figure 2, shown in Figure 5, the surface of each tooth has a sharp surface portion 22a defined by the cutting edge 24a adjacent the surface 22. The surface of each tooth is also made up of chip-breaking surfaces 28 which are associated with each cutting sector and cause the formation and expulsion of the chips. The surfaces of the notches 32 are offset from each other and preferably arranged on a helix, preferably a left-handed helix.

In order to produce the rotary cutting tool according to the invention, the required number of teeth, the pitch of the theoretical helix angle, the pitch of the effective angle, and the length of each cutting sector must be predetermined. This data enables the value of the offset between one tooth and another, and the lengths of the helical and axial parts of each cutting sector to be determined.

A conventional disc-shaped tool is used to produce the grooves. The inclination of the side of this tool to the axis of the mill is initially set at a value equal to the effective helix angle AE. The removal is thus started on the effective helix and continues through the length of the helical part of the sector, followed by the axial connecting part. This operation is repeated through the length of each groove.

After returning to the starting position, the mill under manufacture is rotated counterclockwise by the angle necessary for the formation of the second tooth. The removal is then continued on the theoretical helix for a distance equal to the offset of the sectors, after which the same sequence as for the preceding tooth is repeated. After all the teeth have been completed, the peripheral notches 32 are formed in the cutting edges. The diametral sharpening is carried out conventionally.

As will be clear to an expert, the cylindrical end mill according to the invention has the faces of its teeth sharpened to achieve improved cutting edges, and its shape enables the resharpening of the faces of the teeth, as well as conventional diametral resharpening.

## Claims

1. A rotary cutting tool, particularly a cylindrical end mill, comprising an elongate body with an attachment portion (2) and a cutting portion (4), the cutting portion having a plurality of helical grooves (6, 8, 10, 12) defining between them a corresponding plurality of helical teeth (14, 16, 18, 20) each having a peripheral surface (22), a cutting edge (24), a face (26), a groove (28) for discharging the chips, and a back (30), characterised in that each tooth is constituted by a plurality of adjacent cutting sectors (T) each of which has a helical cutting-edge section (24a) and a connecting section (24b) which extends in an axial plane, the helical cutting-edge section having a helix angle (AE) larger than the ideal helix angle (AT) characterising the helical shape of each tooth.

2. A tool according to Claim 1, characterised in that the cutting sectors of each tooth are offset axially from the cutting sectors of the adjacent tooth.

3. A tool according to Claim 1 or Claim 2, characterised in that the peripheral surface (22) has a notch (32) in correspondence with each cutting-edge section (24b) which extends in an axial plane.

4. A tool according to Claim 3, characterised in that the notches are arranged along a helix.

FIG. 1

2

1

24a 24a
24b 4

FIG. 8

4

28

26

28

26

EP 0 329 624 A2

# FIG. 2

# FIG. 3

# FIG. 4

FIG. 5

30

22
28
32
28
32
22a
32
22
28
28
32
32
22a
24b
32
32
24a
22a
22
32
32
32
32

FIG. 6

AT

24b

32

24a

32

FIG. 7

AE

AT

24b

24a

24b

24a

T